# EUROPEAN PATENT SPECIFICATION

(11) **EP 2 698 489 B1**
(45) Date of publication and mention of the grant of the patent: **02.08.2017**
(21) Application number: 12771567.0
(22) Date of filing: 09.04.2012
(51) Int. Cl.: E05B 47/06, F16F 3/04, E05B 15/04

(54) **CLUTCH MECHANISM FOR ELECTROMECHANICAL LOCK CYLINDERS**
KUPPLUNGSMECHANISMUS FÜR ELEKTROMECHANISCHE SCHLOSSZYLINDER
MÉCANISME D'EMBRAYAGE POUR CYLINDRES ÉLECTROMÉCANIQUES DE SERRURES

(30) Priority: 14.04.2011 ES 201130588 P
(43) Date of publication of application: 19.02.2014
(73) Proprietor: Salto Systems, S.L., 20180 Oiartzun (Guipuzcoa) (ES)
(72) Inventor: FERREIRA SÁNCHEZ, Carlos, E-20180 OIARTZUN, Guipúzcoa (ES)
(74) Representative: Ungria López, Javier
(86) International application number: PCT/ES2012/070235
(87) International publication number: WO 2012/140297

(56) References cited:
- WO-A1-02/059443
- CN-A- 101 775 930
- DE-A1-102008 063 061
- ES-A1- 2 331 865
- US-A- 5 105 673
- US-A1- 2010 012 454
- US-A1- 2010 257 906

## Description

### OBJECT OF THE INVENTION

The present invention, as expressed in the wording of this specification, relates to a perfecting in the Spanish invention patent ES2331865B1, which discloses a Clutch Mechanism Applicable to Electromechanical Lock Cylinders.

The objective of the invention is to improve the performance of the clutch mechanism and to increase the useful life of the battery of the motor that forms part of the electromechanical cylinder of the lock, thus obtaining a smoother and more effective operation of the clutch mechanism, and therefore, of the lock set.

More specifically, the perfecting of the invention focuses on a novel movable carriage that moves in an axial manner to engage and disengage a clutch disc associated with an eccentric, which is in charge of the activation of the latch and/or bolt of the lock, and a novel control of the electromagnetic motor.

### BACKGROUND OF THE INVENTION

Electromechanical locks are currently well known, which operation is based on a code in the lock by means of an electric card or key, thereby activating a mechanical system that opens or closes the door where the lock is installed.

This installation or system is mounted within the knob or knobs of the cylinder of the door intervening in the lock set, which entails a considerable limitation of space.

On the other hand, current clutch systems mounted in conventional locks require large electric motors for their own activation in order to activate the clutch mechanism itself. Logically, the foregoing entails a loss of space, the space occupied by the motor and the space occupied by the clutch system. In addition, the well-known and mandatory layout of the end stop detectors mean that the space required must be even larger.

In short, clutch mechanisms applicable to current electromechanical locks suppose a significant occupation of space, which evidently means an increase in the volume corresponding to the set making up the clutch mechanism associated with the electric drive motor.

On the other hand, invention patent ES2331865B1 (from the same applicant than the present invention), is known, which consists of a clutch mechanism applicable to electromechanical lock cylinders comprising a cylinder mounted in the lock that incorporates a rotor bearing the corresponding clutching means interiorly and axially. Based on these elements, the rotor is susceptible of interlocking with a clutch disc, on which there is an eccentric affixed and which rotation produces the activation of the latch and/or bolt of the lock.

It is characterized in that the clutching means are constituted based on a carriage that moves in an axial manner through the activation of a spindle coupled at the output of an electromagnetic motor; with the particularity that one of the branches of a U-shaped resilient element is positioned in one of the roots of the spindle, which has uneven lateral branches and is located in a housing established in the internal face of the base body forming part of the carriage itself, in combination with a cover affixed to said base by means of appropriate screws; there being two springs with an axial layout envisaged in the base and in the cover of the carriage which rest on the internal face on the cover itself on one end, and on the other are partially housed in the end housings belonging to clutch pegs susceptible of occupying an inoperative and retracting position with respect to the cover of the rotor, or an operative and emerging position, which passes through holes established in the corresponding clutch disc to which the drive eccentric of the latch and/or bolt of the lock is affixed; with the additional particularity that the rotation of the carriage is blocked by means of a pair of rods emerging from the internal face of the cover of the rotor, said rods also constituting guiding means with minimal friction in the axial movements of the carriage.

A first problem presented by invention patent ES2331865B1 is that if a user is applying a rotation pair to the knob against the mechanisms of the lock, the clutch pegs remain arranged between the cover of the rotor and the clutch disc, which makes their removal impossible. Likewise, the carriage cannot be removed either, causing the blockage of the spindle and the motor. This blockage is detected by the circuit of the motor, a detection that is carried out due to the increase in the consumption of current, causing the disconnection of the motor itself in an operation that lasts a fraction of a second, to then retry the disengagement of the cylinder repeatedly until the cause of the blockage disappears.

The problem lies in that if the user is maintaining the rotation pair without being able to release the clutch pegs for a long period of time, the consumption of the motor increases due to the repeated connections and disconnections of the motor, and therefore, the useful life of the battery of the motor is shortened.

Likewise, a second problem of the carriage is that the performance of the resilient element is low. This is due to the fact that on one hand, the larger branch of the U-shaped resilient element is subject to a double embedment at the ends thereof, which means that the deformation experienced by said larger branch is very small. The foregoing, in addition to reducing performance, implies the correct design of the position of the resilient element in the base body of the carriage to ensure the contact between said branch and the spindle in their end positions. On the other hand, the energy load of a resilient element is proportional to the length of the thread, which in this case is very small because the length of the thread would only be the larger branch of the resilient element.

### DESCRIPTION OF THE INVENTION

With the purpose of achieving the objectives and avoiding the inconveniences mentioned in the previous sections, the present invention proposes improvements to invention patent ES2331865B1, which discloses a Clutch Mechanism Applicable to Electromechanical Lock Cylinders. Therefore, ES2331865B1 is the closest state of the art on which the preamble of the attached independent claim is based.

The improvements of the new clutch mechanism improve its performance and also increase the useful life of the battery of the motor.

The clutch mechanism applicable to electromechanical lock cylinders is constituted based on a rotor, which is a cylindrical body and in which interior there is an electromagnetic drive motor mounted. The electromagnetic motor has an output shaft, on which a spindle is axially mounted. The spindle is envisaged to produce a linear movement of a movable carriage during its rotation. Said carriage is likewise located in the interior of the rotor, which is closed at its free end by means of a front cover, such that the aforementioned set, that is to say, the rotor with the other elements corresponding to the clutch mechanism, remain inside of the external cylinder of the lock.

In turn, the electromagnetic motor comprises a control circuit.

Therefore, the clutch mechanism applicable to electromechanical lock cylinders comprises the movable carriage that moves in an axial manner within the rotor, said rotor being housed inside of the external cylinder of the lock and the electromagnetic motor also being located inside of the rotor, which output shaft connects to the spindle located in correspondence with a centred gap of the movable carriage. The rotation of the spindle generates the axial movement of the movable carriage. The movable carriage is led in guides that form part of the front cover affixed to the rotor.

In addition, the movable carriage comprises a cover and a base that house clutch pegs associated with two rear springs located in axial housings established in end sections of the clutch pegs. The latter are located and guided in axial gaps of the base of the movable carriage, the clutch pegs also being guided in holes of the front cover. There is a clutch disc after the front cover provided with axial holes, which face the holes of the front cover in a certain angular position of the clutch disc. An eccentric is affixed to the clutch disc, which is in charge of activating the latch and/or the bolt by means of the rotation thereof when the clutch pegs are engaged in the axial holes of the clutch disc.

Therefore, the front cover of the rotor has the aforementioned pair of holes that constitute a guide for the clutch pegs in the movement thereof together with the set of the movable carriage, such that, when the clutch pegs protrude through the holes of the front cover, the clutch pegs can engage the clutch disc and therefore, the eccentric in charge of activating the latch and/or bolt of the lock. The eccentric is affixed, by means of screws, to a clutch disc having axial holes in which the clutch pegs are interlocked.

The clutch mechanism of the present invention replaces the U-shaped resilient element comprised in the movable carriage according to the state of the art with a resilient element determined by two front springs joined at one of the ends thereof by a common transverse portion in a novel manner. In addition, the movable carriage has been modified in a novel manner to contain the new resilient device.

By means of the new movable carriage in general, and the resilient device comprised in the movable carriage in particular, the two problems associated with the patent of the state of the art are solved and at least two technical effects are obtained. The first technical effect, associated with the first problem, is to avoid the increase in the consumption of current of the electromagnetic motor, as well as to avoid the continuous connections/disconnections of the motor. The second technical effect associated with the second problem is to help the electromagnetic motor to start its movement at the end start (clutch-engaged position) and at the end stop (clutch-release position). The second technical effect is obtained by means of the continuous pushing of the resilient device against the thread of the spindle. The first technical effect is achieved by the partial compression of the front springs and an improved control circuit of the motor.

Therefore, the mechanism of the present invention comprises: i) an electromagnetic motor comprising an output shaft connected to a screw spindle; and ii) a movable carriage that can move in an axial manner by means of the spindle, where the movable carriage in turn comprises clutch pegs. The movable carriage of the mechanism of the present invention also comprises a resilient device in its interior determined by two front springs joined at one of the ends thereof by a common transverse portion engaged in a thread root of the spindle, and which moves the movable carriage by means of the common transverse portion between a clutch-release position and a clutch-engaged position, such that in the clutch-release position, the front springs are compressed, and in the clutch-engaged position, the common transverse portion is deformed (state of over-elongation), such that in both positions, the common transverse portion pushes continuously against the spindle.

According to a first preferred embodiment of the invention, the clutch mechanism also comprises an improved control circuit of the electromagnetic motor which, in the case of the blockage of the movable carriage in the clutch-engaged position by the action of a user, the control circuit detects the interlocking of the clutch pegs and continues to compress the front springs by means of the action of the spindle on the common transverse portion until reaching a position in which the clutch pegs are released and the movable carriage moves to the clutch-release position after the blockage by the user stops. The movement of the movable carriage to the clutch-release position is carried out by the decompression of the front springs. In addition, the control circuit sends a signal to the electromagnetic motor to rotate the spindle until the common transverse portion is located at the end stop of the clutch-release, after the blockage of the movable carriage stops and the movable carriage is in the clutch-release position.

According to a second preferred embodiment of the invention, the control circuit detects the interlocking of the clutch pegs by means of the detection of an excess in the consumption of energy in the compression of the front springs carried out by the action of the spindle on the common transverse portion when attempting to take the movable carriage from the clutch-engaged position to the clutch-release position.

According to a third preferred embodiment of the invention, the front springs are coupled to tubular portions that begin at the bottom of lateral recesses of a base comprised in the movable carriage, the lateral recesses being located at points diametrically opposite to the internal face of the base of the movable carriage.

According to a fourth preferred embodiment of the invention, the clutch mechanism of the present invention also comprises guides that guide the movable carriage in its axial displacement, the aforementioned guides forming part of the front cover. The guides are coupled and guided in through perforations established in the tubular portions.

According to a fifth preferred embodiment of the invention, the clutch mechanism of the present invention additionally comprises axial gaps in the base where the clutch pegs are housed, which are arranged in a diametrical and perpendicular direction to the diametrical direction in which the tubular portions are located.

Next, in order to facilitate a better comprehension of this specification, figures representing the object of the invention in an illustrative rather than limitative manner accompany this specification and are an integral part thereof.

### BRIEF DESCRIPTION OF THE FIGURES

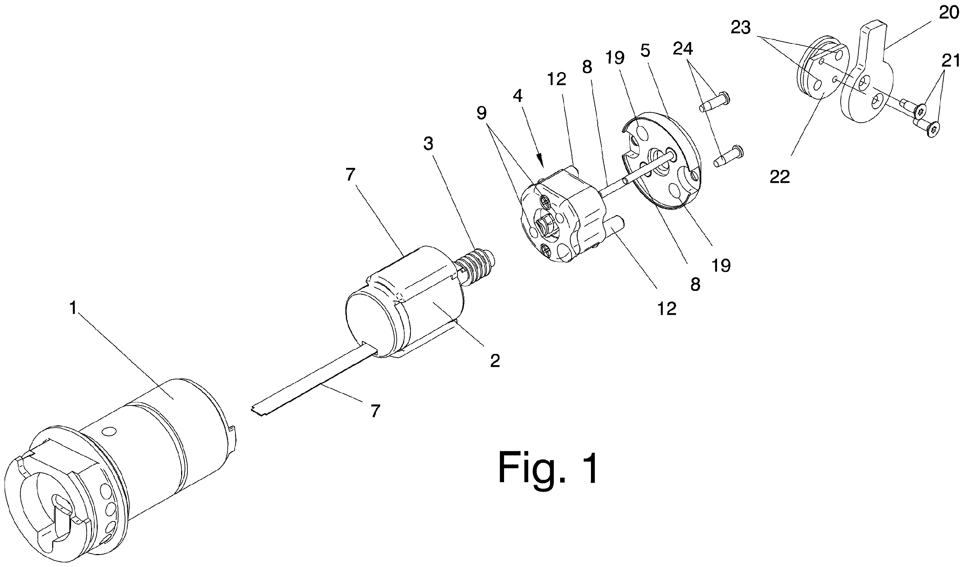

**Figure 1****.-** Shows an exploded perspective view of an electromechanical lock incorporating the clutch mechanism for electromechanical cylinders of the present invention in its interior.
   The lock basically comprises an external cylinder, inside which a rotor is in turn housed, and inside which there is a motor which output shaft is connected to a spindle, which rotatory movement drags a carriage that can be moved in an axial manner, by means of which the clutch-engaged and clutch-release positions of the clutch mechanism are attained.

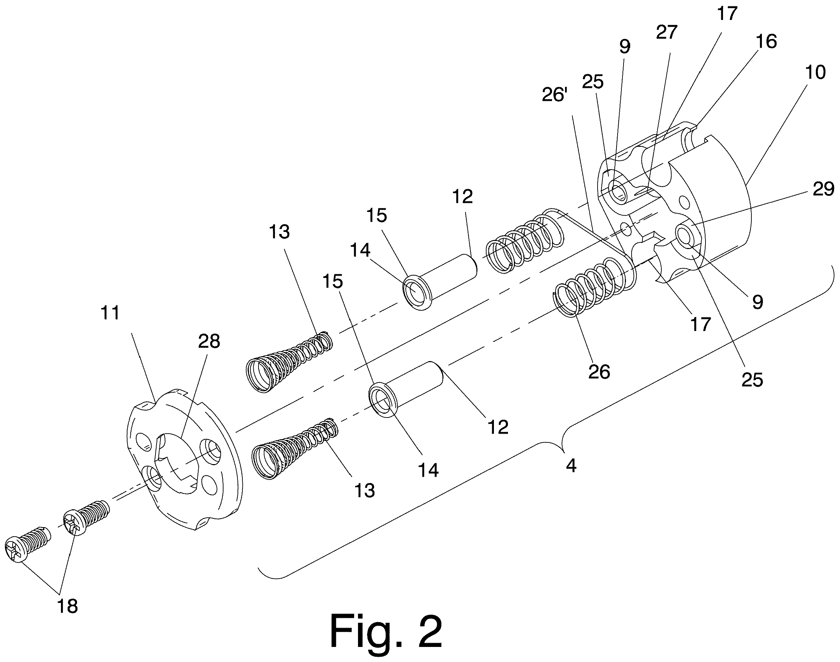

**Figure 2****.-** Shows an exploded perspective view of the clutch mechanism of the present invention.

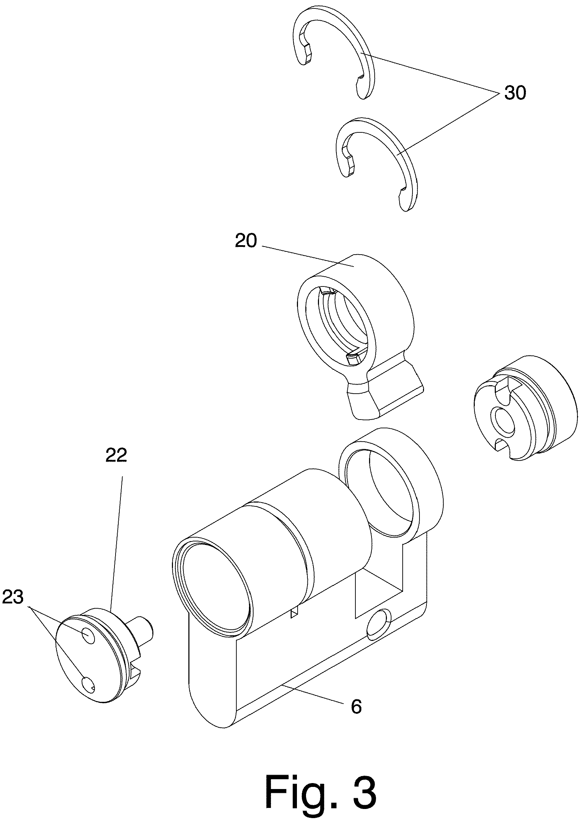

**Figure 3****.-** Shows an exploded perspective view of part of the clutch mechanism and cylinder of the lock of the present invention.
**Figure 4a****.-** Shows a sectioned view of the clutch mechanism in an inactive position (clutch-release) of the present invention.
**Figure 4b****.-** Shows another sectioned view of the clutch mechanism in an inactive position of the present invention.
**Figures 5a****,** **5b****.-** Show respective sectioned views of the clutch mechanism of the present invention in an operating position when there is an angular offset between clutch pegs incorporated to the characteristic movable carriage and holes of a clutch disc.
**Figures 6a****,** **6b****, and** **6c****.-** Shows respective sectioned views of the clutch mechanism in an active position of the clutch mechanism of the present invention.

### DESCRIPTION OF AN EMBODIMENT OF THE INVENTION

Taking into account the numbering adopted in the figures, the clutch mechanism for electromechanical lock cylinders of the present invention contemplates the following nomenclature used in the description:
- 1.-: Rotor
- 2.-: Electromagnetic motor
- 3.-: Spindle
- 4.-: Movable carriage
- 5.-: Front cover
- 6.-: External cylinder
- 7.-: Control circuit
- 8.-: Guides
- 9.-: Through perforations
- 10.-: Base
- 11.-: Cover
- 12.-: Clutch pegs
- 13.-: Rear springs
- 14.-: Axial housings
- 15.-: End flanges
- 16.-: Internal flanges
- 17.-: Axial gaps
- 18.-: Screws
- 19.-: Holes
- 20.-: Eccentric
- 21-: Screws
- 22.-: Clutch disc
- 23.-: Axial holes
- 24.-: Screws
- 25.-: Lateral recesses
- 26.-: Front springs
- 26'-: Common transverse section
- 27.-: Front through hole
- 28.-: Rear through hole
- 29.-: Tubular portions

- 30.-: Plastic washers.

The clutch mechanism comprises a movable carriage 4 that can move through a spindle 3 activated by means of the rotation of the output shaft of an electromagnetic motor 2. The movable carriage 4 is comprised by two parts facing each other and connected to each other: a base 10 and a cover 11, and between them, a pair of clutch pegs 12 associated with two rear springs 13 each, which are arranged between the cover 11 of the movable carriage 4 and axial housings 14 established in the rear end section of the clutch pegs 12. These are housed and guided in their movement within axial gaps 17 of the base 10 belonging to the movable carriage 4, while the clutch pegs 12 are in turn held in their most advanced position in internal flanges 16 located at the end of the axial gaps 17 in combination with end flanges 15 of the clutch pegs 12, which make contact against the internal flanges 16.

In turn, the base 10 and the cover 11 of the movable carriage 4 have two holes facing each other and respectively centred: a front through hole 27 and another rear through hole 28, the spindle 3 being located in both of them, which rotation generates the advance and return of the set of the movable carriage 4.

The base 10 and the cover 11 are joined to one another by means of screws 18.

On the other hand, in diametrically opposite areas, the internal face of the base 10 flanking its front through hole 27 incorporates two lateral recesses 25, where trunk-conical tubular portions 29 are located. In said tubular portions 29, a resilient device formed by two springs 26 joined at one of the ends thereof by means of a common transverse portion 26' forming part of both front springs 26 having an helical structure, is coupled, all of which constitutes a single integral piece making up an aforementioned resilient device.

The common transverse portion 26' of the resilient device crosses the front through hole 27 of the base 10 of the movable carriage 4 in a perpendicular manner, while it is coupled to the thread root of the spindle 3, with which the rotation thereof will drag the movable carriage 4 towards one or the other direction depending on the rotation direction of said spindle 3 by means of the common transverse portion 26' of the resilient device.

On the other hand, the tubular portions 29 of the base 10, where both front springs 26 are coupled, include through perforations 9 through which guides 8 of a front cover 5 of a rotor 1 are introduced. Said rotor 1 houses the electromagnetic motor 2 and the movable carriage 4 in its interior, and in turn the rotor 1 houses an external lock cylinder 6.

The axial movement of the movable carriage 4 is guided and directed in the guides 8 of the front cover 5 to cause the emergence or establish the retraction of the clutch pegs 12. The clutch pegs, in the open position, emerge through holes 19 located in the front cover 5 of the rotor 1, the clutch pegs 12 in turn interlocking in axial holes 23 of a clutch disc 22 arranged after the front cover 5. In this situation, the clutch mechanism is arranged such that the opening of the door is carried out by means of the activation of an external knob, not shown in the figures, because an eccentric 20 dragging the clutch disc 22, which is affixed to the eccentric 20 with screws 21, with elastic washers 30, or with another type of conventional device, in its rotation movement, can be moved.

It should be noted that the diametrical direction where the tubular portions 29 are located is perpendicular to the diametrical direction where the gaps 1 of the base forming part of the movable carriage 4 are found.

The electromagnetic motor 2 has a control circuit 7 that, in addition to controlling the operation of the motor, also detects the corresponding end stops, as described in the patent of the state of the art.

The rotor 1 is a hollow body with a cylindrical shape, in which interior the electromagnetic drive motor 2 is mounted, in which output shaft the spindle 3 is mounted in an axial manner, which is envisaged to produce with its rotation a linear movement of the movable carriage 4 located in the interior of the rotor 1, as explained above, being closed at its free end by means of the cover 5, such that aforementioned set, that is to say, the rotor 1 with the other elements corresponding to the clutch mechanism, remain inside of the external lock cylinder 6.

The front cover 5, in which guide 8 the set of the movable carriage 4 is directed, is affixed to the rotor 1 by means of screws 24.

The element providing movement to the improved movable carriage 4 is the common transverse portion 26'. In this case, and given that the common transverse portion 26' is not doubly embedded, as is the case with the U-shape resilient element of the patent of the state of the art, the common transverse portion 26' has a greater deformation, with the advantages this entails that are indicated below.

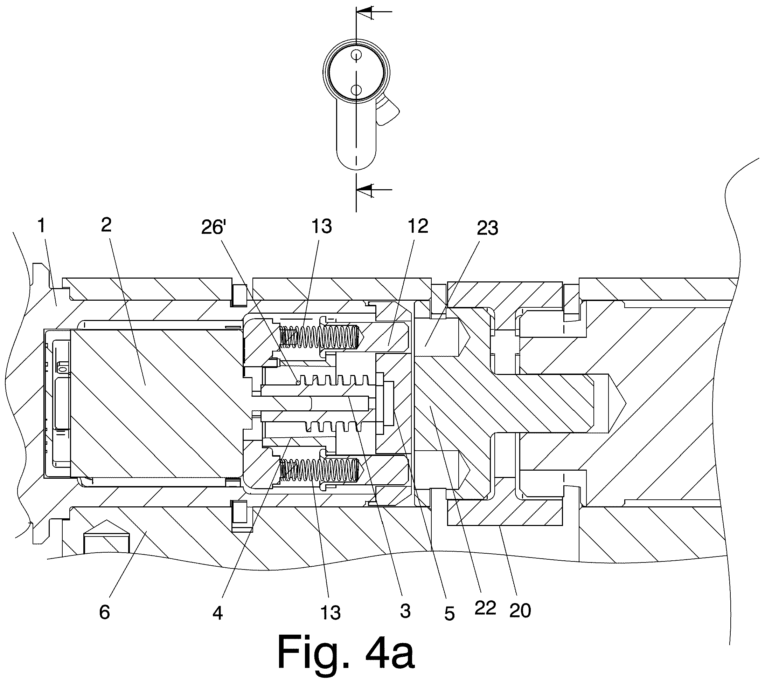

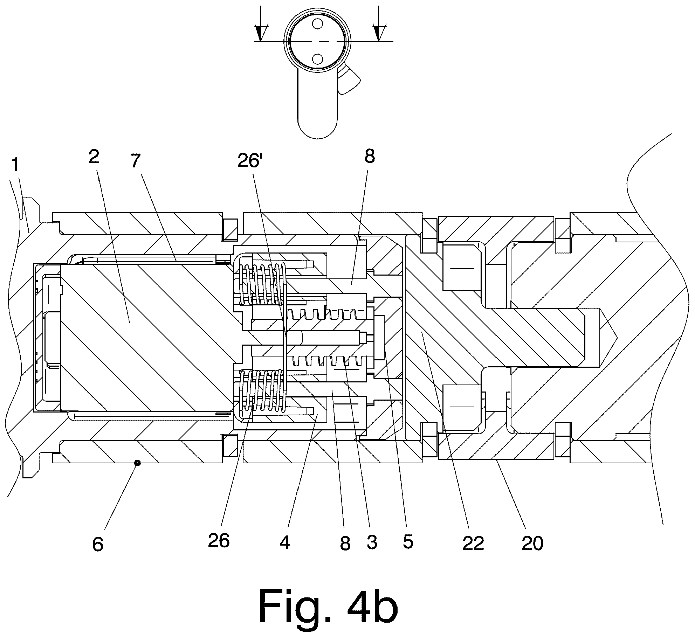

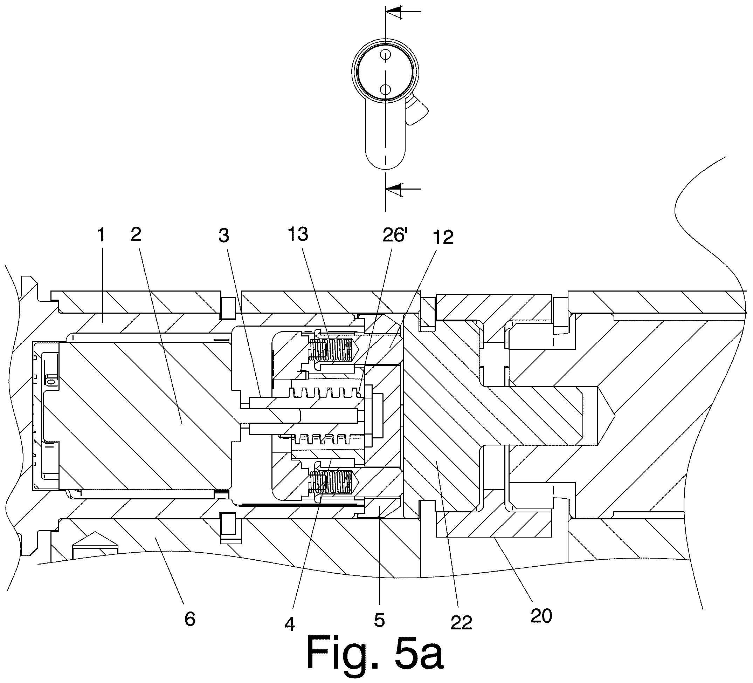

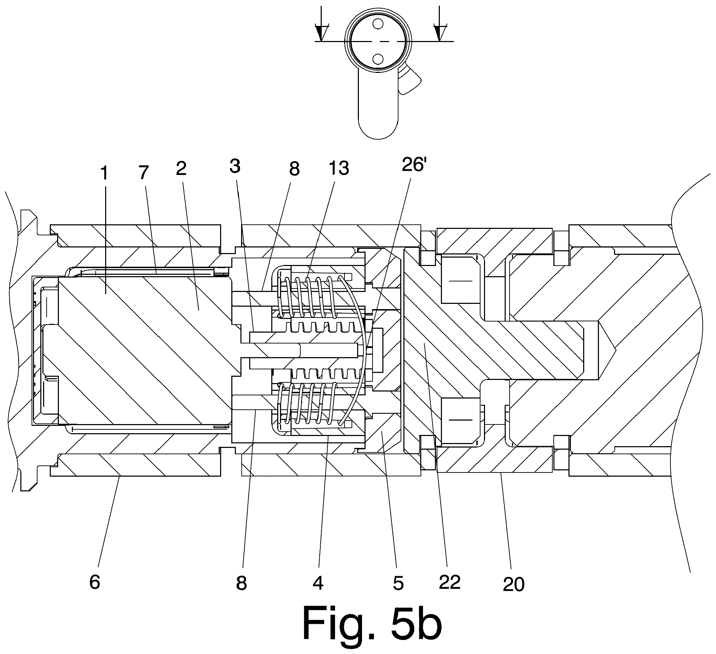

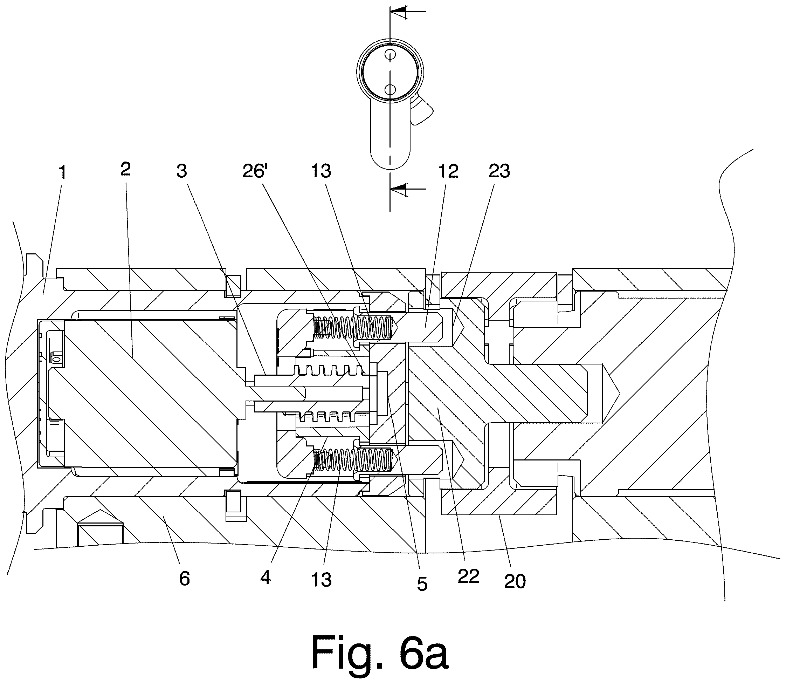

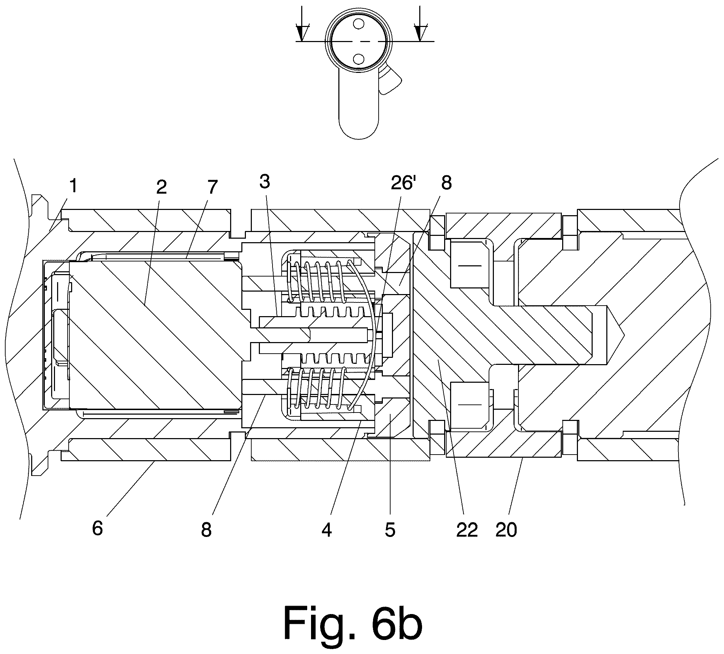

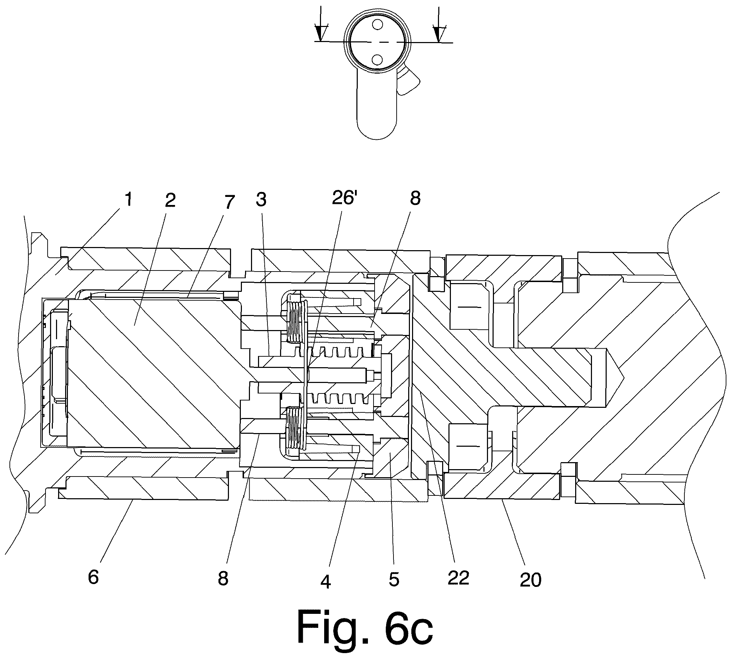

Figures 4 to 6 show the different positions of the clutch mechanism with the improved movable carriage 4, in the clutch-release position (figures 4a and 4b), in the operating position when there is an angular offset between the clutch pegs 12 and the axial holes 23 of the clutch disc 22 (figures 5a and 5b), and lastly, in the clutch-engaged position, as shown in figures 6a and 6b.

Figures 4b and 6b show the movable carriage 4 in the end stop positions, in the clutch-release position in figure 4b, such that in this position, the front springs 26 are half-compressed; therefore, the common transverse portion 26' is continuously being pushed towards the thread root of the spindle 3, which causes the movement of the common transverse portion 26' immediately upon the rotation of the spindle 3, ensuring the operation of the system.

Likewise, in the clutch-engaged position (figure 6b), the common transverse portion 26' is deformed (over-elongation situation) thanks to the non-existence of the double embedment as was the case in the invention patent of the state of the art, such that said deformation causes the common transverse portion 26' to be in constant contact with the thread root of the spindle 3, which leads, as in the previous case, to the immediate movement of the common transverse portion 26' upon the rotation of the spindle 3, ensuring the operation of the system.

Likewise, the design specifications of the carriage, to ensure the contact between the resilient element and the spindle, are not as restrictive as in the invention of the patent of the state of the art.

On the other hand, the energy load of the resilient element of the present invention is higher than the energy load of the resilient element of the invention of the patent of the state of the art. This is due to the fact that the length of the thread of the resilient element of the present invention is the length of the transverse portion 26' plus the length of the springs 26 and, therefore, is greater than the length of the larger branch of the U-shaped resilient element of the patent of the state of the art.

On the other hand, in the case of the situation in which the user is applying a rotation pair to the knob against the mechanisms of the lock, that is to say, that the clutch pegs 12 are arranged (blocked) between the front cover 5 of the rotor 1 and the clutch disc 22, which means they cannot be removed, the movable carriage 4 would not be able to move.

Now, unlike the carriage of the state of the art, in the movable carriage 4 of the present invention when the spindle 3 rotates, the common transverse portion 26' cannot move the carriage because it is trapped by the clutch pegs 12, due to which the energy is used in compressing the front springs 26 in such a way that that, when the clutch pegs 12 are released, the movable carriage 4 is also released and the front springs 26 decompress, thereby moving the movable carriage 4 to the clutch-release position.

Upon the compression of the springs 26, the consumption of energy is higher than when the carriage is moving in a normal operating mode, due to which the control circuit of the motor detects the interlocking of the pegs. At this time, the control circuit keeps rotating the spindle, and therefore, moving the common transverse portion 26' to a position in which, when the clutch pegs are released, they remain in a clutch-release position. Subsequently, and after a long period of time, the control circuit gives only one order to the motor to pull back the carriage to the end stop clutch-release position, instead of repeated orders as in the main patent.

Therefore, with the improved movable carriage 4 of the present invention, we also avoid an increase in the consumption of energy of the electromagnetic motor 2, and therefore, the useful life of the battery supplying the same is increased.

Lastly, it should be noted that thanks to the new structure and configuration of the movable carriage 4, the mounting of the elements is faster and easier.

## Claims

1. **Clutch mechanism for electromechanical lock cylinders,** where the clutch mechanism comprises the following:
• an electromagnetic motor (2) having an output shaft connected to a screw spindle (3);
• a movable carriage (4) that can be moved in an axial manner by means of said spindle (3); the movable carriage (4) in turn comprises clutch pegs (12) and a resilient device in its interior which is engaged in a thread root of the spindle (3), and which moves the movable carriage (4) between a clutch-released position and a clutch-engaged position;
**characterized in that** the resilient device is determined by two front springs (26) joined at one of the ends thereof by a common transverse portion (26') engaged in the thread root of the spindle (3), wherein in the clutch-released position the two front springs (26) are compressed, and in the clutch-engaged position, the common transverse portion (26') is deformed, such that in both positions, the common transverse portion (26') pushes continuously against the spindle (3).

2. **Clutch mechanism** according to claim 1, **characterized in that** it also comprises a control circuit of the electromagnetic motor (2) which, in the case of the blockage of the movable carriage (4) in the clutch-engaged position by the action of a user, the control circuit detects the interlocking of the clutch pegs (12) and continues to compress the front springs (26) by means of the action of the spindle (3) on the common transverse portion (26') until reaching a position in which, after the blockage by the user stops, the clutch pegs (12) are released and the movable carriage (4) moves to the clutch-release position by means of the decompression of the front springs (26).

3. **Clutch mechanism** according to claim 2, **characterized in that** the control circuit detects the interlocking of the clutch pegs (12) by means of the detection of an excess in the consumption of energy in the compression of the front springs (26) carried out by the action of the spindle (3) on the common transverse portion (26'), by attempting to take the movable carriage (4) from the clutch-engaged position to the clutch-release position.

4. **Clutch mechanism** according to any one of the previous claims, **characterized in that** said front springs (26) are coupled to tubular portions (29) that begin at the bottom of lateral recesses (25) of a base (10) comprised in the movable carriage (4), the lateral recesses (25) being located at points diametrically opposite of the internal face of the base (10) of the movable carriage (4).

5. **Clutch mechanism** according to any one of the previous claims, **characterized in that** the mechanism also comprises guides (8) that guide the movable carriage (4) in its axial movement, said guides (8) forming part of the front cover (5); said guides (8) are coupled and guided in through perforations (9) established in the tubular portions (29).

6. **Clutch mechanism**, according to claim 4 or 5, **characterized in that** it also comprises axial gaps (17) in the base (10) where clutch pegs (12) are housed, which are arranged in a diametrical and perpendicular direction to the diametrical direction where the tubular portions (29) are found.

## Patentansprüche

1. Kupplungsmechanismus für elektromechanische Schlosszylinder, wobei der Kupplungsmechanismus Folgendes umfasst:
• einen elektromagnetischen Motor (2) mit einer Ausgangswelle, die mit einer Schraubenspindel (3) verbunden ist;
• einen beweglichen Schlitten (4), der in einer axialen Weise mithilfe der Spindel (3) bewegt werden kann; wobei der bewegliche Schlitten (4) seinerseits Kupplungsstifte (12) und eine Federvorrichtung im Inneren umfasst, die in ein Gewindeunterteil der Spindel (3) eingesetzt ist, und die den beweglichen Schlitten (4) zwischen einer Kupplungs-Ausrückstellung und einer Kupplungs-Einrückstellung verschiebt;
**dadurch gekennzeichnet, dass** die Federvorrichtung von zwei vorderen Federn (26) bestimmt wird, die an einem der Enden durch einen gemeinsamen transversalen Abschnitt (26') verbunden sind, der in das Gewindeunterteil der Spindel (3) eingerückt ist, wobei in der Kupplungs-Ausrückstellung die zwei vorderen Federn (26) zusammengedrückt sind, und in der Kupplungs-Einrückstellung der gemeinsame transversale Abschnitt (26') verformt ist, so dass in beiden Stellungen der gemeinsame transversale Abschnitt (46') kontinuierlich gegen die Spindel (3) drückt.

2. Kupplungsmechanismus nach Anspruch 1, **dadurch gekennzeichnet, dass** er außerdem eine Steuerschaltung des elektromagnetischen Motors (2) umfasst, wobei im Falle der Blockade des beweglichen Schlittens (4) in der Kupplungs-Einrückstellung durch Betätigung eines Benutzers die Steuerschaltung die Verriegelung der Kupplungsstifte (12) ermittelt und mit dem Zusammendrücken der vorderen Federn (26) durch die Wirkung der Spindel (3) auf den gemeinsamen transversalen Abschnitt (26') fortfährt, bis eine Stellung erreicht wird, in der die Kupplungsstifte (12), nachdem die Blockade durch den Benutzer endet, ausgerückt sind und der bewegliche Schlitten (4) mittels der Dekompression der vorderen Federn (26) auf die Kupplungs-Ausrückstellung verschoben wird.

3. Kupplungsmechanismus nach Anspruch 2, **dadurch gekennzeichnet, dass** die Steuerschaltung die Verriegelung der Kupplungsstifte (12) durch Ermitteln eines übermäßigen Energieverbrauchs im Zusammendrücken der vorderen Federn (26), das durch die Wirkung der Spindel (3) auf den gemeinsamen transversalen Abschnitt (26') ausgeführt wird, bei dem Versuch ermittelt, den beweglichen Schlitten (4) aus der Kupplungs-Einrückstellung in die Kupplungs-Ausrückstellung zu bewegen.

4. Kupplungsmechanismus nach einem der vorhergehenden Ansprüche, **dadurch gekennzeichnet, dass** die vorderen Federn (26) mit röhrenförmigen Abschnitten (29) verbunden sind, die am Boden von lateralen Aussparungen (25) einer Basis (10) beginnen, die in dem beweglichen Schlitten (4) enthalten ist, wobei die lateralen Aussparungen (25) sich an Punkten diametral gegenüber von der Innenseite der Basis (10) des beweglichen Schlittens (4) befinden.

5. Kupplungsmechanismus nach einem der vorhergehenden Ansprüche, **dadurch gekennzeichnet, dass** der Mechanismus außerdem Führungen (8) umfasst, welche den beweglichen Schlitten (4) in seiner axialen Bewegung führen, wobei die Führungen (8) einen Teil der vorderen Abdeckung (5) bilden; wobei die Führungen (8) durch Durchgangsöffnungen (9) verbunden und geführt werden, die in den röhrenförmigen Abschnitten (29) ausgebildet sind.

6. Kupplungsmechanismus nach Anspruch 4 oder 5, **dadurch gekennzeichnet, dass** er außerdem axiale Spalte (17) in der Basis (10) umfasst, wo die Kupplungsstifte (12) aufgenommen werden, die in einer Richtung diametral und lotrecht zu der diametral Richtung angeordnet sind, in der die röhrenförmigen Abschnitte (29) zu finden sind.

## Revendications

1. Mécanisme d'embrayage pour cylindres électromécaniques de serrures, où le mécanisme d'embrayage comprend ce qui suit :
un moteur électromagnétique (2) comportant un arbre de sortie relié à une broche filetée (3) ;
un chariot mobile (4) qui peut être déplacé d'une manière axiale au moyen de ladite broche (3) ; le chariot mobile (4) à son tour comprend des tenons d'embrayage (12) et un dispositif élastique en son intérieur qui est en prise dans une base de filetage de la broche (3), et qui déplace le chariot mobile (4) entre une position débrayée et une position embrayée ;
**caractérisé en ce que** le dispositif élastique est déterminé par deux ressorts avant (26) joints à l'une des extrémités de ceux-ci par une partie transversale commune (26') en prise dans la base de filetage de la broche (3), dans lequel dans la position débrayée les deux ressorts avant (26) sont comprimés, et dans la position embrayée, la partie transversale commune (26') est déformée, de telle manière que dans les deux positions, la partie transversale commune (26') pousse continument contre la broche (3).

2. Mécanisme d'embrayage selon la revendication 1, **caractérisé en ce qu'**il comprend aussi un circuit de commande du moteur électromagnétique (2) qui, dans le cas du blocage du chariot mobile (4) dans la position embrayée par l'action d'un utilisateur, le circuit de commande détecte l'interverrouillage des tenons d'embrayage (12) et continue à comprimer les ressorts avant (26) au moyen de l'action de la broche (3) sur la partie transversale commune (26') jusqu'à atteindre une position dans laquelle, après la fin du blocage par l'utilisateur, les tenons d'embrayage (12) sont libérés et le chariot mobile (4) se déplace dans la position débrayée au moyen de la décompression des ressorts avant (26).

3. Mécanisme d'embrayage selon la revendication 2, **caractérisé en ce que** le circuit de commande détecte l'interverrouillage des tenons d'embrayage (12) au moyen de la détection d'un excès de consommation d'énergie dans la compression des ressorts avant (26) réalisée par l'action de la broche (3) sur la partie transversale commune (26'), en essayant d'amener le chariot mobile (4) de la position embrayée vers la position débrayée.

4. Mécanisme d'embrayage selon l'une quelconque des revendications précédentes, **caractérisé en ce que** lesdits ressorts avant (26) sont couplés à des parties tubulaires (29) qui commencent au fond des évidements latéraux (25) d'une base (10) comprise dans le chariot mobile (4), les évidements latéraux (25) étant situés en des points diamétralement opposés de la face intérieure de la base (10) du chariot mobile (4).

5. Mécanisme d'embrayage selon l'une quelconque des revendications précédentes, **caractérisé en ce que** le mécanisme comprend aussi des guides (8) qui guident le chariot mobile (4) dans son mouvement axial, lesdits guides (8) formant partie du couvercle avant (5) ; lesdits guides (8) sont couplés et guidés dans des perforations traversantes (9) établies dans les parties tubulaires (29).

6. Mécanisme d'embrayage selon la revendication 4 ou 5, **caractérisé en ce qu'**il comprend aussi des espacements axiaux (17) dans la base (10) où les tenons d'embrayage (12) sont logés, qui sont agencés dans une position diamétrale et perpendiculaire à la direction diamétrale où les parties tubulaires (29) se trouvent.
